(19) Europäisches Patentamt
European Patent Office
Office européen des brevets

(11) **EP 4 276 140 B1**

(12) **EUROPEAN PATENT SPECIFICATION**

(45) Date of publication and mention
of the grant of the patent:
**11.03.2026  Bulletin 2026/11**

(21) Application number: **22921017.4**

(22) Date of filing: **31.03.2022**

(51) International Patent Classification (IPC):
*C08J 5/18* (2006.01)     *B65D 23/08* (2006.01)
*B65D 75/00* (2006.01)     *G09F 3/04* (2006.01)

(52) Cooperative Patent Classification (CPC):
**C08J 5/18;** C08J 2323/14; C08J 2423/12;
C08J 2423/14

(86) International application number:
**PCT/JP2022/016763**

(87) International publication number:
**WO 2023/188351 (05.10.2023 Gazette 2023/40)**

(54) **POLYPROPYLENE HEAT-SHRINKABLE FILM**

WÄRMESCHRUMPFENDE FOLIE AUS POLYPROPYLEN

FILM THERMORÉTRACTABLE EN POLYPROPYLÈNE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **28.03.2022  JP 2022052155**

(43) Date of publication of application:
**15.11.2023  Bulletin 2023/46**

(73) Proprietor: **TOYOBO CO., LTD.**
**Osaka-shi, Osaka 530-0001 (JP)**

(72) Inventors:
• **YAMAZAKI, Atsuro**
**Aichi 4848508 (JP)**
• **ISHIMARU, Shintaro**
**Aichi 4848508 (JP)**
• **HARUTA, Masayuki**
**Aichi 4848508 (JP)**

(74) Representative: **Vossius & Partner**
**Patentanwälte Rechtsanwälte mbB**
**Siebertstraße 3**
**81675 München (DE)**

(56) References cited:
EP-A1- 2 116 354         WO-A1-2014/021120
JP-A- 2000 159 946      JP-A- 2001 294 678
JP-A- 2003 205 966      JP-A- 2004 149 778
JP-A- 2006 082 383      JP-A- H07 256 754
JP-B2- 5 160 028

## EP 4 276 140 B1

**Description**

TECHNICAL FIELD

The present invention relates to a polypropylene heat-shrinkable film suited as a heat-shrinkable label, and to labels using such films, and packaged articles with labels.

BACKGROUND ART

Heat-shrinkable films are widely used as labels primarily for preventing contamination and tampering of the contents of glass bottles and plastic bottles, as well as for protecting packaged items and products. One particularly common application is for labeling beverage PET bottles. Generally, when labeling a PET bottle with a heat-shrinkable film, a PET bottle covered with a label is transported on a conveyer line to a tunnel filled with steam. Inside the tunnel, steam is blown onto the film, heating the film to approximately 70°C to 100°C, causing it to shrink and attach to the bottle. Films that are widely used to this end are those made by drawing polyester, polystyrene, or polyvinyl chloride, which offer excellent low-temperature heat shrinkability.

On the other hand, beverage PET bottles have attracted attention as recyclable resource. After use, PET bottles are collected and recycled into molding resin. However, the labels must be separated from the PET bottles because the plastics used for labels are of different materials from the PET bottles, and the labels are often printed on.

In other words, the labels need to be removed from the bottles before recycling because inclusion of the labels leads to a decrease in the quality of PET bottle recycling. The reality, however, is that the bottles are frequently collected without removing the labels. At present, the labels are removed by collectors, and the recycling workload is high. This is because polystyrene, polyester, and polyvinyl chloride have a small difference in specific gravity compared to PET bottles, and cannot be easily separated in water by float-sink separation. Industrially, the density-based float-sink separation is a very easy process, allowing separation by specific gravity in water, particularly when the labels have a specific gravity of 1.0 or less compared to the PET bottles, which have a specific gravity of about 1.3 or higher. Such labels enable separation with considerable efficiency even when the labels become included during the collection of PET bottles, greatly reducing the workload during collection, and enabling an improvement in the quality of the recycled resin obtained from the collected PET bottles.

Under these circumstances, expectations are high for the use of polypropylene because it has a specific gravity of about 0.9, making it lighter than PET and enabling floatation separation in water. A problem, however, is the insufficient shrinkability at the temperature of 90°C required for steam shrinkage.

Various proposals have been made to improve the low-temperature shrinkability. For example, in PTL 1, petroleum resins or polyethylene are added to enable low-temperature drawing and improve low-temperature shrinkability. However, adding petroleum resins not only increases the specific gravity, leading to a decrease in the efficiency of float-sink separation, but also causes significant post-shrinkage (natural shrinkage) at room temperature in the film drawn at low temperatures. This can result in changes in film dimensions, and, in the case of rolled films, it can lead to deformation, causing problems such as printing misalignment or wrinkling during secondary processing.

The film proposed in PTL 2 is intended to reduce the rate of natural shrinkage by controlling and reducing the molecular weight distribution of polypropylene, or layering an amorphous resin having a high glass transition temperature, such as a cyclic olefin resin. However, these films were found to be insufficient in low-temperature shrinkability compared to the rate of shrinkage required for beverage labels. Additionally, cyclic olefin resins involve the issue of high specific gravity.

The film disclosed in PTL 3 describes a heat-shrinkable polyolefin film formed in an elongated shape with a constant width from a polyolefin resin including a propylene-$\alpha$-olefin copolymer as a principal component, a main shrinkage direction thereof being in a longitudinal direction. The aforementioned polyolefin film satisfies the following requirements: (1) the hot-water heat shrinkage ratio in the longitudinal direction is 15% or more and 40% or less when the film is treated in hot water at 90°C for 10 seconds; (2) the hot-water heat shrinkage ratio in a width direction orthogonal to the longitudinal direction is -5% or more and 10% or less when the film is treated in hot water at 90°C for 10 seconds; (3) the right angle tear strength in the width direction per unit thickness after the film is shrunk by 10% in the longitudinal direction in hot water at 80°C is 50 N/ mm or more and 200 N/mm or less; and (4) the peel strength is 0.1 N/15mm or less when surfaces of two of the films are joined and a pressure of 0.4 MPa is applied to the films for 90 seconds while the films are heated at 90°C.

The film disclosed in PTL 3 describes a heat-shrinkable polypropylene film which is excellent in transparency and low-temperature shrinkability and can be separated from polyethylene terephthalate by a specific gravity method. The aforementioned film is preferably made from a propylene-1-butene random copolymer and has a specific gravity of 1.0 or less, a haze after heat treatment of 8% or less and a heat shrinkage ratio of 30% or more when measured at 90° C for 10 seconds.

## CITATION LIST

### PATENT LITERATURE

PTL 1: JP5690103B
PTL 2: JP4574462B
PTL 3: EP 2 116 354 A1
PTL 4: JP 2001 294 678 A

### NON PATENT LITERATURE

NPL 1: In-situ investigation on the structural evolution of mesomorphic isotactic polypropylene in a continuous heating process: Polymer 105 (2016) 133-143

## SUMMARY OF INVENTION

### PROBLEMS TO BE SOLVED BY THE INVENTION

The present invention was made to overcome the foregoing issues, and it is an object of the invention to provide a heat-shrinkable polypropylene film having a specific gravity of 0.95 or less, and that exhibits excellent low-temperature shrinkability and small natural shrinkage.

### SOLUTION TO THE PROBLEMS

The inventors have diligently studied and as a result, have discovered a means to solve the above problems by the following methods, leading to the achievement of this invention. The invention is defined by the appended set of claims.

### ADVANTAGEOUS EFFECTS OF THE INVENTION

A polypropylene heat-shrinkable film of the invention has a high shrinkage rate at 90°C, allowing for desirable finishing as a beverage label without wrinkles or insufficient shrinkage. Because of its low natural shrinkage rate, the film shows small dimensional changes and reduced wrinkles even after prolonged storage, demonstrating superior practicality. Additionally, the low specific gravity of the film enables efficient float-sink separation from PET bottles, making it highly recyclable.

### BRIEF DESCRIPTION OF THE DRAWINGS

[FIG. 1] FIG. 1 is a chart representing the heat flow after differential scanning calorimetry of films of Example 1 and Comparative Example 1, along with the positions of melting peaks.
[FIG. 2] FIG. 2 is a non-reversing heat flow chart after temperature-modulated differential scanning calorimetry of films of Example 1 and Comparative Example 4.

### DESCRIPTION OF EMBODIMENTS

A polypropylene heat-shrinkable film obtained by drawing a polypropylene resin composition used in the invention needs to have at least one melting point (melting peak temperature) in each of the range of 70°C or higher and 100°C or lower, and in the range of higher than 100°C and 170°C or lower respectively, as measured by differential scanning calorimetry (DSC). A heat-shrink film for labeling PET bottles generally undergoes shrinkage by being heated at a temperature of 70°C to 100°C with steam. Accordingly, the crystals aligned in the drawn film undergo partial melting, and show shrinking properties when the film has a melting point in a range of 70°C or higher and 100°C or lower. On the other hand, having a melting point in a range of higher than 100°C and 170°C or lower is preferable because it enables an improvement of heat resistance, and a reduction of fusing or blocking during heating. It is more preferable to have a melting point in each of a range of 75°C or higher and 97°C or lower, and a range of 110°C or higher and 165°C or lower respectively, particularly preferably in each of a range of 80°C or higher and 95°C or lower, and a range of 115°C or higher and 160°C or lower respectively.

For use as polypropylene resins according to the invention propylene homopolymers, and a copolymer of propylene and other $\alpha$-olefins are suitable. According to the invention, the copolymer component $\alpha$-olefin in copolymers of propylene and other $\alpha$-olefins is selected from ethylene, 1-butene, 1-pentene, 1-hexene, and 1,4-methyl-1-pentene. According to the invention, the copolymer is a random or block copolymer obtained by polymerizing propylene with one of the $\alpha$-olefins, or two or more of the $\alpha$-olefins exemplified above. A resin composition obtained from the propylene homopolymer or propylene-$\alpha$-olefin copolymer has a specific gravity of 0.85 or more to 0.95 or less, preferably 0.86 or more to 0.93 or less, particularly preferably 0.87 or more to 0.92 or less. A polypropylene resin with a specific gravity of less than 0.85 is not preferable because such polypropylene resins typically show considerably low crystallinity, and cannot readily provide the required rate of shrinkage in the drawn film. A specific gravity of more than 0.95 is not preferable because it results in a film with a specific gravity of more than 0.95.

In the invention, it is not preferable to contain a cyclic olefin resin because it increases the specific gravity, and decreases the low-temperature shrinkability, as described above. It is also not preferable to contain a petroleum resin (also called hydrocarbon resin) or a hydrogenated petroleum resin because it leads to an increase of specific gravity, and an increase of natural shrinkage rate, as described above.

According to the invention, the polypropylene heat-shrinkable film obtained by drawing an undrawn sheet obtained from the polypropylene resin composition needs to have a specific gravity of 0.87 or more to 0.95 or less. The specific gravity is more preferably 0.88 or more to 0.94 or less, particularly preferably 0.88 or more to 0.93 or less. It is not preferable to use raw materials that produce a specific gravity of 0.87 or less because it decreases the crystallinity, causing a decrease of shrinkage rate or a decrease of heat resistance. A specific gravity of more than 0.95 is not preferable because it may lead to a decrease of efficiency during float-sink separation when, for example, the heat-shrinkable film is printed on as a label.

The melting point of the polypropylene resin can be controlled by adjusting the type or amount of $\alpha$-olefin. In order to obtain the polypropylene resin composition having different melting point peaks in the two temperature ranges, it is preferable to mix copolymers of different melting points in appropriate proportions, or employ block copolymerization of $\alpha$-olefins. The total fraction of $\alpha$-olefins in the copolymer contained in the polypropylene resin composition is preferably 8 mol% or more to 24 mol% or less, more preferably 10 mol% or more to 22 mol% or less.

According to the invention, the polypropylene resin composition has a melt flow rate (MFR) at 230°C of preferably 0.1 to 30 g/10 min, more preferably 0.5 to 20 g/10 min, particularly preferably 1.0 to 15 g/10 min. A MFR of less than 0.1 g/min is not preferable because it leads to an increased pressure during extrusion, and an increased likelihood of streaking from a die. A MFR of more than 30 g/10 min is not preferable because it leads to a decrease of viscosity, and increases the likelihood of breakage, in addition to causing unstable discharge, or thickness unevenness due to a decreased stress during drawing. The melt flow rate can be measured using methods that comply with JIS-K-7210.

Various additives or fillers may be optionally added to the resin used in the invention, provided that such additives or fillers do not interfere with the properties. Examples include heat stabilizers, antioxidants, light stabilizers, antistatic agents, lubricants, nucleating agents, fire retardants, pigments, dyes, calcium carbonate, barium sulfate, magnesium hydroxide, mica, talc, clay, zinc oxide, magnesium oxide, aluminum oxide, antimicrobial agents, anti-fogging agents, and additives that impart natural decomposition properties. From the perspective of ease of handling and to impart slidability, antistatic properties, and heat blocking resistance, it is particularly preferable to add organic lubricants such as fatty acid amides; surfactants such as fatty acid alkylamines, fatty acid alkylamine esters, and fatty acid monoglyceride esters; and anti-blocking agents such as silica and PMMA. When adding a surfactant, the amount is appropriately adjusted to achieve the required antistatic properties, with an upper limit of 20,000 ppm. When adding an anti-blocking agent, the amount is adjusted within the range of 300 ppm or more to 10,000 ppm or less. Adding these components above these upper limits is not preferable because it leads to a decrease of haze, and a loss of transparency. It is also possible to contain components such as other thermoplastic resins, thermoplastic elastomers, and rubbers, provided that it is not detrimental to the properties of the film of the invention.

The film of the invention may be laminated with a layer of the same polypropylene resin or other resins, for example, a gas barrier resin layer of polyethylene, a saponified copolymer of ethylene and vinyl acetate, or polyvinyl alcohol, provided that it does not interfere with the film properties.

The film of the invention may optionally be subjected to a surface treatment, provided that it does not interfere with the properties of the invention. The surface treatment method is not particularly limited, and may be, for example, corona discharge, a plasma treatment, a flame treatment, or an acid treatment. Preferred are corona discharge, plasma treatment, and flame treatment because these can be continuously performed, and can be easily implemented before the winding process in the manufacture of the film. Corona discharge is particularly preferred as a means to improve the surface wetting tension.

A polypropylene heat-shrinkable film of the invention may be formed as a monolayer film, or may have a laminated structure of a skin layer and a core layer, or even more layers. Lamination can be achieved by, for example, multilayer co-extrusion. In the case of a laminated structure of two or more layers, it is preferable for each layer to be constituted of a polypropylene resin composition.

A polypropylene heat-shrinkable film of the invention has a thickness in the range of preferably 12 μm or more to 100 μm or less. More preferably, the film thickness ranges from 15 μm or more to 80 μm or less. A film thickness of less than 12 μm is not preferable because it leads to a decrease of firmness, and creates wrinkles when the film is attached as a label. A thickness of more than 100 μm is not preferable because it raises the raw material cost of film.

A packaged article of the invention is formed by thermally shrinking a label obtained from a heat-shrinkable polypropylene film of the invention and preferably having perforations or notches, after covering the label over at least a portion of the outer periphery of a subject of packaging. Examples of the packaging subject include PET bottles for beverages, various bottles and cans, plastic containers such as for snacks and lunch boxes, and paper boxes. Typically, when covering these packaging subjects by thermally shrinking a label obtained from the heat-shrinkable polypropylene film, the label is thermally shrunk by about 5% to 40% to attach it to the packaged article. The label to be applied over the packaging subject may or may not be printed on.

Various methods can be used to produce a label. When rolling a rectangular-shaped film and overlapping the edges, an organic solvent may be applied slightly inward from the edge of one side of the film to bond the film, or the film may be thermally fused by overlapping and fusing the edges using a thermal sealing technique such as heat sealing or seal and cut sealing. Alternatively, ultrasonic sealing can be used to thermally fuse the film. It is also possible to bond the film by applying various types of adhesives to the film edges, for example, such as by using hot melt adhesives, UV curable adhesives, solvent-based adhesives using chloroprene, acid-modified polyolefins, or chlorinated polyolefins, water-based adhesives using phenolic resins or polyvinyl acetate, or chemically reactive adhesives using epoxy resins, urethane resins, or silicon resins. These methods can be used according to the film processing method. When organic solvents, or liquid adhesives that are applicable to various films are used to bond the edges, the solvent or adhesive may be applied slightly inward from the edge of one side of the film in a film roll, and the film may be immediately rolled to overlap and bond the edges, before cutting the resulting tubular film into a label form.

The organic solvents used to bond a polypropylene film of the invention into a label may be, for example, aliphatic hydrocarbons such as normal hexane, normal heptane, cyclohexane, and methylcyclohexane, aromatic hydrocarbons such as toluene, xylene, and trimethylbenzene, halogenated hydrocarbons such as methylene chloride and chloroform, phenolic compounds such as phenol, furan compounds such as tetrahydrofuran, or mixed solvents of these. It is, however, preferable to use cyclohexane as the adhesion solvent because it can exhibit even higher solvent adhesion strength.

A polypropylene heat-shrinkable film of the invention needs to be a film with a widthwise thermal shrinkage rate (i.e., a rate of thermal shrinkage in hot water at 90°C) of 40% or more to 80% or less, as calculated from the formula 1 below from the length before and after shrinkage when subjected to processing under no load for 10 seconds in 90°C hot water.

Rate of thermal shrinkage = {(length before shrinkage - length after shrinkage)/length before shrinkage} × 100 (%)　　　Formula 1

A widthwise thermal shrinkage rate in hot water at 90°C of less than 40% is not preferable because such small shrinkage leads to wrinkles or looseness in the label after thermal shrinkage. The upper limit of the hot water thermal shrinkage rate is not particularly limited. However, the technically achievable upper limit is 80% in the invention. As for the lower limit, the widthwise thermal shrinkage rate in hot water at 90°C is preferably 42% or more, more preferably 45% or more, particularly preferably 50% or more.

A polypropylene heat-shrinkable film of the invention needs to have a lengthwise thermal shrinkage rate in hot water of -5% or more and 12% or less when subjected to processing under no load for 10 seconds in 90°C hot water. A lengthwise thermal shrinkage rate in hot water of less than -5% is not preferable because the film expands and becomes prone to distortion when used as a label. A lengthwise thermal shrinkage rate in hot water at 90°C of more than 12% is not preferable because it leads to large longitudinal shrinkage and tends to cause increased distortion when the film is used as a label. The lengthwise shrinkage rate is more preferably -3% or more to 11% or less, particularly preferably -1% or more to 10% or less.

A polypropylene heat-shrinkable film of the invention has a haze of preferably 1% or more to 15% or less. A haze of 15% or more is not preferable because it makes the film low in transparency and visually unsuitable. The technically achievable lower limit of haze is 1% in the invention. The practically sufficient lower limit is 2%. As for the upper limit, the haze is more preferably 12% or less, particularly preferably 10% or less. It should be noted that the haze varies with the amount of additives such as lubricants, and the formation of spherocrystals can be reduced to achieve a lower haze by using polypropylene resulting from the copolymerization of the polypropylene resin composition with α-olefins. The haze is a measured value according to the method specified in JIS K7105.

A polypropylene heat-shrinkable film of the invention needs to have a widthwise natural shrinkage rate (a rate of dimensional change) of 3.0% or less after being aged for 672 hours in a 40°C, 65% RH atmosphere. The widthwise natural shrinkage rate is preferably 2.5% or less, more preferably 2.0% or less. With a natural shrinkage rate of 3.0% or less under 40°C, 65% RH, it is possible to reduce problems that may occur during secondary processing, such as dimensional changes over time when the film is stored at room temperature or in summer warehouses, or the occurrence of wrinkles or printing misalignment due to the shrinkage of the film over time during storage in a rolled state. Particularly, in the invention, the widthwise natural shrinkage rate needs to be reduced because it tends to increase due to the high draw rate in this direction. A high widthwise natural shrinkage rate is not preferable because the available film width decreases during storage, leading to a decrease in yield during processing. Additionally, because the sides of the film are not secured along the width direction in a rolled state, the film tends to buckle due to natural shrinkage during storage, making the film susceptible to the formation of wavy wrinkles in the roll. The lower limit of natural shrinkage rate should be as closely to 0% as possible. However, in the invention, the technically achievable lower limit is 0.1%.

A polypropylene heat-shrinkable film of the invention preferably shows a heat absorption of 0.30 J/g or more to 0.95 J/g or less in non-reversing heat flow in a range of 20°C or higher and 60°C or lower, as measured by temperature-modulated differential scanning calorimetry (temperature-modulated DSC). With a heat absorption of 0.95 J/g or less, the natural shrinkage rate can be reduced to 3.0% or less. Smaller values of heat absorption are preferred because a further reduction of natural shrinkage rate is possible with smaller heat absorption. However, the technically achievable lower limit is 0.30 J/g in the invention. The upper limit is more preferably 0.90 J/g or less, particularly preferably 0.85 J/g or less. The following is a detailed description of the endothermic component.

The inventors of the invention investigated methods to reduce the time-dependent natural shrinkage of polypropylene heat-shrinkable films obtained through low-temperature drawing. It was found that the melting point and the heat of fusion associated with the thermal shrinkage rate observed at 70°C or higher temperatures are not usually correlated with the natural shrinkage rate. Additionally, because natural shrinkage occurs irreversibly over time at temperatures significantly lower than the melting point of resin, the present inventors speculated the possible involvement of the movement of amorphous molecular chains observed at temperatures below room temperature.

In relation to such movement of amorphous molecular chains, it has been reported in NPL 1 (In-situ investigation on the structural evolution of mesomorphic isotactic polypropylene in a continuous heating process: Polymer 105 (2016) 133-143; Fig. 9 in page 138) that polypropylene that has underwent rapid cooling and has low crystallinity shows an endothermic peak attributed to rigid amorphous components at 40°C to 60°C, a temperature range higher than the glass transition temperature, 0°C, of common polypropylene. Although NPL 1 does not describe anything about the thermal shrinkage rate nor natural shrinkage rate of film, the present inventors conducted temperature-modulated DSC to analyze the non-reversing heat flow of the polypropylene heat-shrinkable films being studied by the present inventors, in order to investigate the irreversible changes in the rigid amorphous components. The analysis confirmed the presence of an endothermic peak in the 20°C to 60°C temperature range. Additionally, the heat absorption associated with this endothermic peak was found to correlate positively with the natural shrinkage rate. In other words, the invention was completed based on the finding that the natural shrinkage rate can be controlled by controlling the heat absorption occurring in the 20°C to 60°C range. The method of controlling heat absorption will be described in the explanation of the film forming method below.

A polypropylene heat-shrinkable film of the invention has a widthwise refractive index (Ny) of preferably 1.490 or more to 1.530 or less, more preferably 1.500 or more to 1.520 or less as measured with an Abbe refractometer. An Ny of less than 1.490 is not preferable because it means alignment has hardly occurred, and the required hot water shrinkage rate cannot be obtained. An Ny of more than 1.530 is not preferable because it means a high degree of alignment with an increased number of high-melting-point crystals due to the aligned crystals, leading to a decrease of widthwise hot water shrinkage rate.

In a polypropylene heat-shrinkable film of the invention, it is required that the difference (Ny - Nx) between the widthwise refractive index (Ny) and the lengthwise refractive index (Nx) be 0.015 or more to 0.030 or less, as measured with an Abbe refractometer. The difference is more preferably 0.016 or more to 0.028 or less, particularly preferably 0.018 or more to 0.026 or less. The required hot water shrinkage rate, both lengthwise and widthwise, can be obtained by drawing the film in such a way as to balance the lengthwise refractive index and the widthwise refractive index within this range.

The present inventors conducted intensive studies to achieve a high shrinkage rate by drawing a polypropylene raw material, and found that a high shrinkage rate can be obtained through the formation of a structure containing low-melting-point crystals aligned in the direction of drawing when the material is drawn widthwise at low temperatures after generating crystal components under controlled conditions in a low-melting-point range of 70°C or higher to 100°C or lower in a heat treatment and cooling process performed under predetermined conditions before drawing the material along the width direction. The inventors have also studied methods to reduce the natural shrinkage rate of the film drawn in the manner described above. The studies led to the discovery of a method whereby the natural shrinkage rate can be reduced when the drawn film is relaxed under appropriate conditions, without compromising the shrinkage rate obtained through drawing. These findings led to the completion of the invention. The following specifically describes the method.

For melt extrusion of the raw material resin, it is preferable to dry the polypropylene resin raw material with a dryer such as a hopper dryer or a paddle dryer, or with a vacuum dryer. After drying, the polypropylene resin raw material is melted at a temperature of 200 to 300°C, and extruded into a film form, using an extruder. Methods such as the T die method, tubular method, or other existing methods can be used for extrusion.

The sheet-shaped molten resin after extrusion can then be rapidly cooled to 30°C or less to obtain an undrawn film. For rapid cooling of the molten resin, it is preferable to use a method whereby the molten resin is cast onto a rotating drum through a spinneret with the drum being controlled at low temperature with a cooling chiller or similar device, and rapidly cooled to solidify into a substantially unoriented resin sheet.

In the invention, longitudinal drawing may be performed in light of production speed and strength improvement, after the undrawn sheet is obtained in the manner described above. For longitudinal drawing, the undrawn sheet may be drawn after preheating with heated rolls by utilizing the speed difference between the rolls, as commonly practiced for the formation of a drawn film. Preferably the sheet is drawn at a roll temperature of 50°C or higher to 100°C or lower. A roll temperature of less than 50°C is not preferable because it tends to cause film slipping and unstable drawing. A roll temperature higher than 100°C is not preferable because it can cause problems such as an increased likelihood of the film adhering to the heated rolls, and wrapping itself around the rolls. The roll temperature is more preferably 55°C or higher to 90°C or lower. The lengthwise draw rate is preferably 1.1 or more to 2.0 or less, more preferably 1.2 or more to 1.7 or less. A draw rate of more than 2.0 is not preferable because it leads to increased distortion during heat treatment, and tends to increase thickness variation, in addition to posing difficulty in reducing the longitudinal shrinkage. A draw rate of less than 1.1 is essentially ineffective in terms of improvement of production speed, though a reduction of lengthwise shrinkage rate is possible.

The following is a detailed description of the preferred conditions for the widthwise drawing and the processes before and after it.

(1) Heat treatment before widthwise drawing

In the film production of the invention, it is preferable to perform a heat treatment at a temperature of 70°C or higher to 140°C or lower for the duration of 3.0 seconds or more to 50.0 seconds or less, before drawing the film along the width direction. For the heat treatment, the film may be heated while being transported on a line provided for heat treatment, using, for example, heated air or a ceramic heater. Alternatively, the film may be heated with the clips gripping the film edges along the width direction in a tenter, before the film is drawn widthwise. The heat treatment selectively generates crystal components having a melting point in the low temperature range of 70°C or higher to 100°C or lower, allowing for the retention of the low-melting-point crystal components even after drawing along the width direction. This enables the production of a high-shrinkage heat-shrinkable film. The heat treatment also has the effect of reducing the lengthwise shrinkage rate when the film is drawn lengthwise.

The temperature of intermediate heat treatment in excess of 140°C is not preferable because it encourages the formation of crystal components with a high melting point of 100°C or higher, and leads to a decrease in the rate of shrinkage after widthwise drawing. Conversely, a heat treatment temperature of less than 70°C is not preferable because it leads to hardly any formation of low-melting-point crystal components by heat treatment, and tends to decrease the shrinkage rate during widthwise drawing. Additionally, a heat treatment temperature of less than 70°C is not preferable because it leads to an increase of lengthwise shrinkage rate when the film is drawn lengthwise. The lower limit of heat treatment temperature is preferably 80°C or more, more preferably 90°C or more. The upper limit of heat treatment temperature is preferably 135°C or less, more preferably 130°C or less. Preferably, the duration of heat treatment is appropriately adjusted within the range of 1.0 second or more to 50.0 seconds or less, depending on the composition of the raw material.

(2) Cooling and widthwise drawing after heat treatment

Preferably, the film is cooled to 70°C or less after the heat treatment, before drawing the film along the width direction. Such cooling allows for the retention of low-melting-point crystal components. After cooling, the film is preferably drawn widthwise at a rate of 2.5 or more to 10.0 or less, with the clips gripping the film edges along the width direction in a tenter. The upper limit of transverse draw rate is more preferably 9.0 or less, particularly preferably 8.0 or less.

Drawing may be performed in two or more stages. Specifically, the film is drawn widthwise inside a tenter twice, with a no draw zone provided in between. The draw rate for the first drawing is preferably 1.5 or more to 7 or less, more preferably 2 or more to 5.5 or less. The draw rate for the second drawing is preferably 1.5 or more to 5 or less, more preferably 1.8 or more to 3.5 or less. The rate in each stage is adjusted within these ranges to ensure that the total draw rate ranges from 2.5 or more to 10.0 or less. By separately drawing the film in this fashion, it is possible to more easily reduce an increase in natural shrinkage rate due to drawing, in addition to reducing the occurrence of breakage during drawing.

Preferably, drawing is performed in the temperature range of 50°C or higher to 100°C or lower. A drawing temperature of lower than 50°C is not preferable because it can lead to the generation of small voids during drawing, resulting in high haze and increased susceptibility to breakage. Conversely, a drawing temperature of higher than 100°C is not preferable because it not only causes the melting of low-melting-point crystal components, leading to a decrease of widthwise shrinkage rate, but also increases the occurrence of thickness variations along the width direction.

The lower limit of widthwise drawing temperature is more preferably 55°C or higher, particularly preferably 60°C or higher. The upper limit of transverse drawing temperature is more preferably 90°C or lower, particularly preferably 85°C or lower.

(3) Widthwise relaxation process

In the transverse drawing film production of the invention, it is required that the film, after being drawn widthwise in the manner described above, be relaxed and shrunk (relaxation) at a temperature of 60°C or higher to 100°C or lower for the duration of 0.5 seconds or more to 20.0 seconds or less by narrowing the tenter widthwise with the clips gripping the film edges along the width direction inside the tenter so that the relaxation rate, determined from formula 2, ranges from 13% to 40% in length along the width direction.

Relaxation rate = {(length before relaxation - length after relaxation)/length before relaxation} $\times$ 100 (%)      Formula 2

A relaxation temperature of lower than 60°C is not preferable because the film may not sufficiently shrink and wrinkles may occur. A relaxation temperature higher than 100°C is not preferable because it results in a greater reduction of shrinkage rate, leading to insufficient shrinkage when the film is used as a heat-shrinkable film. The preferred temperature for the relaxation process is 65°C or higher to 95°C or lower, particularly preferably 70°C or higher to 90°C higher.

Narrowing the length by less than 13% along the width direction in the relaxation process is not preferable because it leads to an increased natural shrinkage rate because of an insufficient reduction of the heat absorption at the peak observed in the 20°C to 60°C temperature range in temperature-modulated DSC. A relaxation rate higher than 40% is not preferable because it leads to a decrease of productivity, in addition to decreasing the shrinkage rate at 90°C. The relaxation rate in the relaxation process is more preferably 15% or higher to 35% or lower, particularly preferably 17% or higher to 33% or lower.

The relaxation process enables a reduction of the natural shrinkage rate while maintaining the required shrinkage rate as a heat-shrinkable film, while leaving the low-melting-point crystal components in the final film. The relaxation process may be separately performed after each drawing when the film is drawn widthwise in two or more stages. Aside from narrowing the tenter along the width direction, the relaxation process may be performed by winding the film as it undergoes shrinkage along the width direction as a result of when the clips gripping the film edges are released near the exit point of the tenter while heat is being applied.

It is to be noted that effective contribution to the improvement of the heat shrinkability along the width direction of the film, the reduction of natural shrinkage rate, and stable film formation does not necessarily arise from any of the specific means mentioned in (1) to (3) alone. Rather, it is probably a combination of all of these means (1) to (3) that enables improvements of heat shrinkability along the width direction, a reduction of natural shrinkage rate, and stable film formation in a highly efficient fashion.

EXAMPLES

The following is a more detailed description of the invention based on Examples. However, the invention is not limited to the aspects of the following Examples, and can be appropriately modified within the purpose and intent of the invention. Tables 1, 2, and 3 present the raw materials and the formulations of the raw materials used in Examples and Comparative Examples, along with the film production conditions (such as drawing conditions and heat treatment conditions). The resin raw materials PP1 to PP6, PE, and COP, petroleum resin, and amorphous PET in Table 1 are as follows.

· Resin raw material PP1: a polypropylene-butene random copolymer (manufactured by Mitsui Chemicals, Inc., product name TAFMER XM7070, MFR = 7.0 g/10 min, melting point 77°C, specific gravity 0.88)
· Resin raw material PP2: a polypropylene-butene random copolymer (manufactured by Mitsui Chemicals, Inc., product name TAFMER XM7080, MFR = 7.0 g/10 min, melting point 83°C, specific gravity 0.88)
· Resin raw material PP3: a polypropylene-ethylene random copolymer (manufactured by Japan Polypro Corporation, product name NOVATEC EG6D, MFR = 1.9 g/10 min, melting point 145°C, specific gravity 0.90)
· Resin raw material PP4: a polypropylene-ethylene random copolymer (manufactured by Japan Polypro Corporation, product name WINTEC WFX6, MFR = 2.0 g/10 min, melting point 125°C, specific gravity 0.90)
· Resin raw material PP5: polypropylene (manufactured by Sumitomo Chemical Co., Ltd., product name FS2011DG3, MFR = 2.5 g/10 min, melting point 159°C, specific gravity 0.91)

· Resin raw material PP6: a polypropylene-ethylene random copolymer (manufactured by Japan Polypro Corporation, WINTEC WFX4T MFR = 7.0 g/10 min, melting point 125°C, specific gravity 0.90)
· Resin raw material PE: a low-density polyethylene resin (manufactured by Sumitomo Chemical Co., Ltd., product name EXCELLEN FX307, MFR = 3.2 g/10 min, melting point 83°C, specific gravity 0.89
· Resin raw material COP: a cyclic olefin resin (manufactured by Topas Advanced Polymers, product name TOPAS 9506F, MFR = 6.0 g/10 min, glass transition temperature 65°C, specific gravity 1.01)
· Petroleum resin 1: an alicyclic hydrocarbon petroleum resin (manufactured by Arakawa Chemical Industries, Ltd., product name ARKON P-125, softening point 125°C, specific gravity 1.04)
· Amorphous PET: neopentyl glycol copolymerized polyethylene terephthalate (containing 30 mol% neopentyl glycol, inherent viscosity 0.72 dL/g, glass transition temperature 75°C)

Note that the MFR values indicated for the polypropylene resins and cyclic olefin resin are values at 230°C, and the MFR values indicated for the polyethylene resin are values at 190°C.

The film evaluation methods are as follows.

[Tm (Melting Point)]

Five milligrams of a film was collected on an aluminum pan, and the heat flow (unit: W/g) at each temperature was measured at a sampling interval of 0.5 seconds while heating the film from -40°C to 200°C at a rate of temperature increase of 10°C/min, using a Shimadzu differential scanning calorimeter (model: DSC60). A heat flow curve was obtained by plotting the heat flow on the vertical axis (with the negative direction indicating heat absorption) and temperature on the horizontal axis (unit: °C).

A regression line was created using values within the range of 55 to 60°C of the heat flow curve. For the heat flow, the value on the heat flow curve was subtracted from the value on the regression line to determine the difference at each temperature, in ascending order from 60°C to 175°C. The temperature at which the difference first exceeded 0.001 W/g was defined as the melting start temperature.

Similarly, a regression line was created using values within the range of 175°C to 180°C of the heat flow curve. For the heat flow from 175°C to 60°C, the value on the heat flow curve was subtracted from the value on the regression line to determine the difference, in descending order from higher temperature. The temperature at which the difference first exceeded 0.001 W/g was defined as the melting end temperature.

A baseline was established by drawing a straight line passing through the points on the heat flow curve at the melting start temperature and melting end temperature. For the heat flow at each temperature between 70°C and 170°C, the value on the heat flow curve was subtracted from the value on the baseline to determine the difference. Among these differences at different temperatures, the values greater than 0.02 W/g and representing maxima with respect to temperature were determined as the melting peaks on the heat flow curve, and the temperatures at the melting peaks were defined as the melting points.

[Heat Absorption in Non-Reversing Heat Flow in Temperature-Modulated DSC]

A film was weighed at 5 mg inside a T-ZERO pan, and heated in heat-only mode from -40°C to 200°C at an average rate of temperature increase of 2°C/min with a modulation period of 40 seconds, using a temperature-modulated differential scanning calorimeter (TM DSC) DSC250 (manufactured by TA instruments). The non-reversing heat flow was measured at a sampling interval of 0.1 seconds, and a non-reversing heat flow curve was obtained by taking non-reversing heat flow (unit: W/g, with the negative direction indicating heat absorption) on the vertical axis and temperature on the horizontal axis (unit: °C).

A regression line was created from values in the 18 to 20°C range of the non-reversing heat flow curve. For the non-reversing heat flow, the value on the non-reversing heat flow curve was subtracted from the value on the regression line to determine the difference, in ascending order from 20°C to 60°C. The temperature at which the difference first exceeded 0.0005 W/g was defined as the melting start temperature.

Similarly, a regression line was created from values on the non-reversing heat flow curve in the 60°C to 62°C range. The value on the non-reversing heat flow curve was subtracted from the value on the regression line to determine the difference, in descending order from 60°C to 20°C. The temperature at which the difference first exceeded 0.0005 W/g was defined as the heat absorption end temperature.

A baseline was established by drawing a straight line connecting the points on the non-reversing heat flow curve at the heat absorption start temperature and heat absorption end temperature. The area enclosed by the non-reversing heat flow curve and the baseline was determined as the peak heat absorption (unit: J/g).

[Identification of α-Olefin Components]

The types of α-olefins such as ethylene and butene in the propylene-α-olefin copolymers are determined by 13C NMR spectroscopy, following the method described in pages 615 to 617 of the Polymer Analysis Handbook (published by Kinokuniya Shoten, 1995). The types of α-olefins can also be determined by IR spectroscopy following the method described in Section (i) Random Copolymers in page 256 of this handbook.

[Thermal Shrinkage Rate (Hot Water Thermal Shrinkage Rate)]

The film was cut into a 10 cm × 10 cm square, parallel to the direction of unrolling. (In the following, the direction of unrolling before cutting is referred to as longitudinal direction, and the direction perpendicular to the unrolling direction on the film surface is referred to as the width direction in the cut film.) The cut film was immersed and thermally shrunk in hot water (± 0.5°C around the predetermined temperature) for 10 seconds under no load. The film was then immersed in 23°C ± 0.5°C water for 10 seconds, removed from water, and measured for its longitudinal and widthwise dimensions. The thermal shrinkage rate was determined for each direction using the formula 1 above.

[Natural Shrinkage Rate]

The film was cut into a 210 mm × 210 mm square shape, parallel to the direction of unrolling. After drawing a 200 mm reference line along the length and width of the cut sample, the film was left to stand for 672 hours in a 40°C, 65% RH atmosphere for aging. The natural shrinkage rate (widthwise) was determined using the formula 3 below.

Natural shrinkage rate = {(length of widthwise reference line before aging - length of widthwise reference line after aging)/length of widthwise reference line before aging} × 100 (%)      Formula 3

[Haze]

The haze was measured in a 23°C atmosphere following JIS K 7105, using a haze meter (300A manufactured by Nippon Denshoku Industries Co., Ltd.). The measurement was conducted twice, and the mean value was determined.

[Specific Gravity]

The specific gravity of the film was calculated as a ratio of the film density to the density of water at 23°C. The film density was measured by the density gradient column method in compliance with JIS K7112.

[Refractive Index]

The sample film was left to stand in a 23 ± 2°C, 65 ± 5% RH atmosphere for 2 hours or more before shrinkage, and its refractive index (Nx, Ny) was measured both lengthwise and widthwise, using the Abbe refractometer, Model 4T, manufactured by Atago Co., Ltd.

[Shrink Finish]

[Shrinkage Distortion of Label]

A heat-shrinkable film with a pre-defined grid pattern with 10 mm intervals was formed into a cylindrical label (a label with the main shrinkage direction of heat-shrinkable film aligned with the circumferential direction) by joining the edges with a 5 mm overlap and heat sealing and cutting the film with an impulse sealer HAKKO 311 (manufactured by Hakko Corporation). The label was placed around a 500 ml PET bottle (with a body diameter of 67 mm, and a minimum diameter of 25 mm at the neck, product name *Jyuroku-cha*), and attached to the bottle by thermally shrinking the label for 10.0 seconds through a steam tunnel (Model SH-1500-L, manufactured by Fuji Astec Inc.) with a zone temperature of 85°C. In attaching the label, adjustments were made so that one end of the label was situated at a portion of the neck with 43 mm diameter. The finish after shrinkage was evaluated by measuring the extent of displacement from the horizontal plane of the grid pattern over 360 degrees on the attached film at the body of the bottle, excluding the grids including the sealed and cut portion, and the maximum distortion value was determined from the measured displacement representing the distortion. The evaluation was conducted according to the following criteria.

Excellent: Maximum distortion is less than 1.0 mm

Good: Maximum distortion is 1.0 mm or more and less than 2.0 mm
Poor: Maximum distortion is 2.0 mm or more

[Wrinkles on Labels]

A label was attached to a PET bottle under the same conditions used in the evaluation of label shrinkage distortion, and the state of generated wrinkles was evaluated according to the following criteria.

Excellent: Zero wrinkles 2 mm or larger in size
Good: One or two wrinkles 2 mm or larger in size
Poor: Three or more wrinkles 2 mm or larger in size

[Appearance Evaluation of Rolls over Time]

(Appearance change after 672 hour storage at 40°C)

The film was slit and wound into a roll measuring 300 mm in width with a film length of 300 m. The roll was placed in a constant-temperature chamber that had been adjusted to create an atmosphere having a temperature of 40°C with $65 \pm 10\%$ RH. After being stored for 672 hours, the roll was removed from the chamber, and the state of wrinkles on a 3 m unrolled portion of the film was evaluated according to the following criteria.

Excellent: Zero wavy wrinkles 1 cm or larger in size
Good: One or two wavy wrinkles 1 cm or larger
Poor: Three or more wavy wrinkles 1 cm or larger

[Evaluation of Heat Blocking Resistance]

The film was cut into two 100 mm $\times$ 100 mm square film pieces, and the two films were overlapped with their corners rotated by 45 degrees. The films were then placed between two square-shaped aluminum plates measuring 150 mm $\times$ 150 mm and 1 mm thick each. Under a load of 500 g applied by placing a weight, the assembly was heated for 1 minute in a hot air oven that had been set to $80 \pm 0.5$°C. After removing the films from the oven with the aluminum plates holding the films in between, the films were cooled by being immersed in $23$°C $\pm 0.5$°C cold water for 10 seconds. The state of blocking between the overlapping films was evaluated according to the following criteria.

Good: The films can be detached from each other, demonstrating no blocking
Poor: The films exhibited adhesion, demonstrating blocking

[Evaluation of Adequacy for Float-Sink Separation]

The film was cut into a square shape measuring 100 mm $\times$ 100 mm. Two liters of water was added into a cylindrical container having a bottom diameter of 130 mm, and, after adjusting the water temperature to $23$°C $\pm 2$°C, the film was submerged to the bottom of the container while taking care to prevent the formation of bubbles on the film. The film was then visually evaluated for its buoyancy according to the following criteria.

Good: The film floated up to the water surface
Poor: The film did not float up to the water surface

[Example 1]

Polypropylene resins PP1 and PP3 were dry blended through an extruder at a weight ratio of 60/40, and 500 ppm of $SiO_2$ (Silysia 266 manufactured by Fuji Silysia Chemical Ltd.) was added as a lubricant to the mixture. This material was melt extruded at 230°C, and was rapidly cooled by winding it around a rotating metal roll that had been cooled to 20°C. This resulted in an undrawn film (a polypropylene resin sheet) having a thickness of 215 $\mu$m. Here, the film was taken up at a rate of about 7.5 m/min (the rotation speed of the metal roll).

Subsequently, the undrawn film was subjected to a heat treatment in a heat treatment zone provided on a conveyer line having multiple sets of rolls continuously disposed thereon. In the heat treatment zone, the film was heated with heated air until the film temperature reached 100°C. The film was then air cooled to 60°C, and guided into a tenter having a transverse drawing zone and a relaxation process zone continuously provided therein.

After preheating to a film temperature of 60°C, the film was drawn twice along the width direction in the transverse drawing zone, first at a rate of 3.0 at 60°C, then at a rate of 2.2 at 60°C. The film was then subjected to a relaxation process at 75°C for 7 seconds in the relaxation process zone, resulting in a 20% relaxation. This produced a transverse uniaxially drawn film having a thickness of 40 $\mu$m.

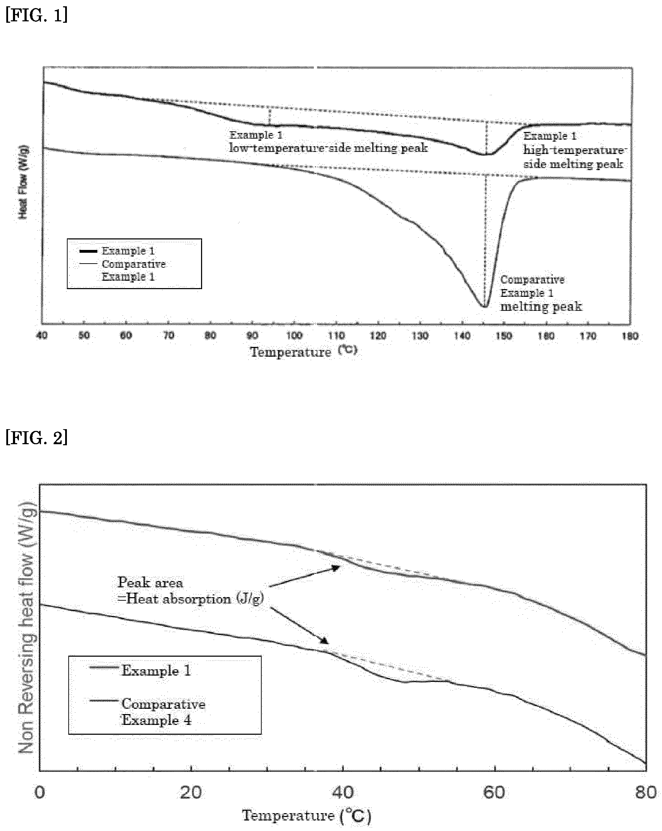

After the transverse uniaxial drawing, the film was wound around a paper tube after slitting the edges, producing a film roll having a predetermined length of transverse uniaxially drawn film (polypropylene heat-shrinkable film) rolled around it with a film width of 500 mm and a film thickness of 40 $\mu$m. The film was then evaluated for its properties using the methods described above. The evaluation result is presented in Table 2. As shown in FIG. 1, DSC showed two melting points, one at 93°C on the lower temperature side, and one at 145°C on the higher temperature side.

[Example 2]

A transverse uniaxially drawn film, 40 $\mu$m thick, was produced using the same method used in Example 1, except that the weight ratio of the polypropylene resins PP1 and PP3 was changed to 75/25. The evaluation result is presented in Table 2.

[Example 3]

A transverse uniaxially drawn film, 40 $\mu$m thick, was produced using the same method used in Example 1, except that the weight ratio of the polypropylene resins PP1 and PP3 was changed to 45/55. The evaluation result is presented in Table 2.

[Example 4]

A transverse uniaxially drawn film, 40 $\mu$m thick, was produced using the same method used in Example 1, except that polypropylene resins PP2 and PP3 were used instead, and these were mixed at a weight ratio of 60/40. The evaluation result is presented in Table 2.

[Example 5]

A transverse uniaxially drawn film, 40 $\mu$m thick, was produced using the same method used in Example 1, except that polypropylene resins PP1 and PP4 were used instead, and these were mixed at a weight ratio of 60/40. The evaluation result is presented in Table 2.

[Example 6]

A transverse uniaxially drawn film, 40 $\mu$m thick, was produced using the same method used in Example 1, except that polypropylene resins PP1 and PP5 were used instead, and these were mixed at a weight ratio of 60/40. The evaluation result is presented in Table 2.

[Example 7]

A transverse uniaxially drawn film, 40 $\mu$m thick, was produced using the same method used in Example 1, except that the heating temperature in the heat treatment zone was changed to 75°C. The evaluation result is presented in Table 2.

[Example 8]

A transverse uniaxially drawn film, 40 $\mu$m thick, was produced using the same method used in Example 1, except that the heating temperature in the heat treatment zone was changed to 125°C. The evaluation result is presented in Table 2.

[Example 9]

An undrawn sheet was obtained in the same manner as in Example 1, except that the undrawn film was taken up at a rate of about 6.3 m/min (the rotation speed of the metal roll) to adjust the thickness to 258 $\mu$m. The undrawn sheet was guided into a longitudinal drawing machine having multiple sets of rolls continuously disposed therein. After preheating to a film temperature of 60°C on a preheating roll, the sheet was drawn 1.2 times between a low-speed drawing roll and a high-speed drawing roll, with a surface temperature of 60°C set for the low-speed drawing roll, and a temperature of 30°C set for the circulating water inside the high-speed drawing roll. A longitudinal uniaxially drawn film, 215 $\mu$m thick, was obtained by adjusting the speed of the low-speed roll at 6.3 m/min (the speed of the film moving with the low-speed roll), and the speed of the high-speed roll at 7.5 m/min (the speed of the film moving with the high-speed roll).

The longitudinal uniaxially drawn film was subjected to a heat treatment, drawing, and relaxation processing using the same methods used in Example 1 to obtain a biaxially drawn film having a thickness of 40 $\mu$m. The evaluation result is presented in Table 2.

[Example 10]

An undrawn sheet was obtained in the same manner as in Example 1, except that the undrawn film was taken up at a rate of about 4.2 m/min to adjust the thickness to 366 $\mu$m. A biaxially drawn film, 40 $\mu$m thick, was obtained using the same method used in Example 9, except that the draw rate was changed to 1.7 by adjusting the speed of the low-speed roll at 4.4 m/min, and the speed of the high-speed roll at 7.5 m/min in the longitudinal drawing machine. The evaluation result is presented in Table 2.

[Example 11]

An undrawn sheet, 225 $\mu$m thick, was obtained under the same conditions used in Example 1, with the sole exception of the different discharge amount. The undrawn sheet was subjected to a heat treatment and guided into a tenter using the same method as in Example 1. A transverse uniaxially drawn film, 40 $\mu$m thick, was obtained using the same method used in Example 1, except with a relaxation rate of 15% after drawing. The evaluation result is presented in Table 2.

[Example 12]

An undrawn sheet, 225 $\mu$m thick, was obtained under the same conditions used in Example 1, with the sole exception of the different discharge amount. The undrawn sheet was subjected to a heat treatment and guided into a tenter using the same method as in Example 1. A transverse uniaxially drawn film, 40 $\mu$m thick, was obtained following the same method used in Example 1, except using the following procedure. After preheating to a film temperature of 60°C, the film was first drawn widthwise 3.0 times at 60°C in the transverse drawing zone, and guided to the relaxation process zone to achieve a 5% relaxation at 60°C in 5 seconds. This was followed by second drawing, whereby the film was drawn 2.2 times at 60°C, and relaxing the film in the relaxation process zone at 75°C to achieve a 15% relaxation in 5 seconds. The evaluation result is presented in Table 2.

[Example 13]

An undrawn sheet, 200 $\mu$m thick, was obtained under the same conditions used in Example 1, with the sole exception of the different discharge amount. The undrawn sheet was subjected to a heat treatment and guided into a tenter using the same method as in Example 1. A transverse uniaxially drawn film, 40 $\mu$m thick, was obtained following the same method used in Example 1, except that the film was drawn 6.6 times in the first drawing, and relaxed 25% in the relaxation process zone at 75°C in 15 seconds, without second drawing. The evaluation result is presented in Table 2.

[Example 14]

An undrawn sheet, 175 $\mu$m thick, was obtained under the same conditions used in Example 1, with the sole exception of the different discharge amount. The undrawn sheet was subjected to a heat treatment and guided into a tenter using the same method as in Example 1. The sheet was drawn 6.6 times widthwise, and, while releasing the clips gripping the edges in a relaxation process zone that had been set to 75°C, the film was wound around a paper tube after slitting the edges while winding the film. This resulted in a transverse uniaxially drawn film measuring 500 mm in width and 40 $\mu$m in thickness. The relaxation rate was calculated to be 35% from the web width at the exit point of the tenter before slitting. The evaluation result is presented in Table 2.

[Example 15]

An undrawn sheet, 110 $\mu$m thick, was formed under the same conditions used in Example 1, with the sole exception of the different discharge amount. Except for this change, the methods of Example 1 were followed for the heat treatment, drawing, and relaxation processing to obtain a transverse uniaxially drawn film having a thickness of 20 $\mu$m. The evaluation result is presented in Table 2.

[Example 16]

An undrawn sheet, 420 μm thick, was formed under the same conditions used in Example 1, with the sole exception of the different discharge amount. Except for this change, the methods of Example 1 were followed for the heat treatment, drawing, and relaxation processing to obtain a transverse uniaxially drawn film having a thickness of 80 μm. The evaluation result is presented in Table 2.

[Comparative Example 1]

A transverse uniaxially drawn film, 40 μm thick, was formed following the same method used in Example 1, except that PP3 was used as the sole polypropylene resin. The evaluation result is presented in Table 3. The melting point was observed only at 145°C in DSC measurement, as shown in FIG. 1. Because a low-melting-point resin was not used, the film turned white due to voids during drawing, resulting in increased haze. The rate of shrinkage was low, and it was not possible to perform the relaxation process as intended, leading to wrinkles in the film during film formation. Because of the highly inadequate rate of shrinkage, the resulting film was insufficient for practical use as a heat-shrinkable film.

[Comparative Example 2]

A transverse uniaxially drawn film, 40 μm thick, was formed following the same method used in Example 7, except that PP1 was used as the sole polypropylene resin. The evaluation result is presented in Table 3. Because a high-melting-point resin was not used, the film melted and deformed, and it was not possible to measure the hot water shrinkage rate at 90°C. In the finish evaluation, the film fused into the PET bottle when heated, causing wrinkles in the fused area. Blocking occurred in the heat blocking resistance evaluation, making the film unsuitable for practical use due to inadequate heat resistance.

[Comparative Example 3]

An undrawn sheet, 215 μm thick, was formed using the same method used in Example 1. A transverse uniaxially drawn film, 40 μm thick, was produced following the same method used in Example 1, except that the heating temperature in the heat treatment zone was changed to 60°C. The evaluation result is presented in Table 3. Because of the low heat-treatment temperature, a melting peak did not occur at 100°C or lower temperatures, and the resulting film had an inadequate thermal shrinkage rate. In the finish evaluation, insufficient adhesion or wrinkle formation was observed due to insufficient shrinkage, making the film inferior in practicality as a heat-shrinkable film.

[Comparative Example 4]

An undrawn sheet, 260 μm thick, was formed using the same method used in Example 1. A film was formed following the same method used in Example 1, except that the relaxation rate in each relaxation process zone was changed to 0% for the undrawn sheet guided into the tenter. The finish was desirable; however, it was not possible to reduce the natural shrinkage rate because the absence of the relaxation process after drawing resulted in higher heat absorption between 20°C to 60°C in temperature-modulated DSC than that observed in Example 1, as shown in Table 3 and FIG. 2. The appearance of the film rolled out after aging was such that wavy wrinkles were present due to natural shrinkage, making the film less practical in terms of ease of storage.

[Comparative Example 5]

Cyclic olefin resin COP1 and polyethylene resin PE1 were dry blended through an extruder at a weight ratio of 50/50. This material was melt extruded at 230°C, and was rapidly cooled by wrapping it around a metal roll rotating at about 7.5 m/min and cooled to 20°C. This resulted in an undrawn film having a thickness of 160 μm. The undrawn film was guided into a tenter, and drawn 4 times at 80°C by preheating it to 80°C. After cooling, the film was slit, and wound around a paper tube to obtain a transverse uniaxially drawn film, as in Example 1. The evaluation result is presented in Table 3. Because the cyclic olefin resin was used, the film exhibited relatively low natural shrinkage. However, the hot water shrinkage rate was insufficient, making the film inadequate in practicality in terms of finish after shrinkage. Additionally, the specific gravity was higher than in the films obtained in Examples.

[Comparative Example 6]

Am amorphous PET resin (neopentyl glycol copolymerized polyethylene terephthalate) was melt extruded through an extruder at 260°C, and was rapidly cooled by wrapping it around a metal roll rotating at about 7.5 m/min and cooled to 20°C. This resulted in an undrawn film having a thickness of 160 μm. The undrawn film was guided into a tenter, and drawn 4 times at 80°C by preheating it to 80°C. After cooling, the film was slit, and wound around a paper tube to obtain transverse uniaxially drawn film, as in Example 1. The evaluation result is presented in Table 3. Because the film had a specific gravity higher than 1.0, it was unsuited for float-sink separation, though the finish after shrinkage was desirable.

[Comparative Example 7]

An undrawn sheet, 350 μm thick, was formed in a three-layer configuration of ABA, where A represents the surface layers, and B represents the middle layer, using a three-layer co-extrusion die with two extruders. The sheet was formed at a winding speed of about 7.5 m/min to provide a layer thickness ratio A:B:A of 1:8:1. For the A layers, the PP6 resin was used, whereas a mixture of PP4, PE1, and petroleum resin 1 was used in the proportions of 45/20/35 for the B layer. The resulting undrawn sheet was guided into a tenter, and was drawn 7 times by heating it to 80°C. This resulted in a transverse uniaxially drawn film having a thickness of 50 μm. After the transverse uniaxial drawing, the film was wound around a paper tube after slitting the edges, producing a film roll having a predetermined length of transverse uniaxially drawn film (polypropylene heat-shrinkable film) rolled around it with a film width of 500 mm and a film thickness of 50 μm. The film was then evaluated for its properties using the methods described above. The evaluation result is presented in Table 3.

The film had desirable finish after shrinkage; however, the natural shrinkage rate was high, and wavy wrinkles were observed in the film rolled out after aging.

As can be clearly seen in Table 2, the films obtained in Examples 1 to 16 all exhibited high shrinkability along the width direction and low shrinkability along the longitudinal direction orthogonal to it, producing a desirable shrink finish. With the relaxation process, it was possible to reduce the natural shrinkage rate, producing hardly any wrinkles after aging, and making the film suitable as a heat-shrinkable film for practical use. Additionally, because of the sole use of polypropylene resins, the specific gravity was considerably low, making the film suitable for float-sink separation from PET bottles. In contrast, the films obtained in Comparative Examples 1 to 7 did not possess properties adequate enough for practical use as heat-shrinkable films, or properties suitable for float-sink separation, as shown in Table 3 and in the descriptions of the respective comparative examples.

[Table 1]

|  | MFR *PP, COP: 230°C g/10 min PE: 190°C g/10 min | Melting point (°C) | Specific gravity |
|---|---|---|---|
| PP1 | 7.0 | 77 | 0.88 |
| PP2 | 7.0 | 83 | 0.88 |
| PP3 | 1.9 | 145 | 0.90 |
| PP4 | 7.0 | 125 | 0.90 |
| PP5 | 2.5 | 159 | 0.91 |
| PP6 | 7.0 | 125 | 0.90 |
| PE | 3.2 | 83 | 0.89 |
| COP | 6.0 | - | 1.01 |
| Petroleum resin | - | - | 1.00 |
| Amorphous PET | - | - | 1.32 |

[Table 2A]

| | | Ex. 1 | Ex. 2 | Ex. 3 | Ex. 4 | Ex. 5 | Ex. 6 | Ex. 7 | Ex. 8 |
|---|---|---|---|---|---|---|---|---|---|
| Resin composition (mass%) | PP1 | 60 | 75 | 45 | 0 | 60 | 60 | 60 | 60 |
| | PP2 | 0 | 0 | 0 | 60 | 0 | 0 | 0 | 0 |
| | PP3 | 40 | 25 | 55 | 40 | 0 | 0 | 40 | 40 |
| | PP4 | 0 | 0 | 0 | 0 | 40 | 0 | 0 | 0 |
| | PP5 | 0 | 0 | 0 | 0 | 0 | 40 | 0 | 0 |
| MD drawing | Preheating temperature (°C) | No drawing | No drawing | No drawing | No drawing | No drawing | No drawing | No drawing | No drawing |
| | Draw rate (fold change) | | | | | | | | |
| TD drawing | Heat-treatment temp. (°C) | 100 | 100 | 100 | 100 | 100 | 100 | 75 | 125 |
| | Temp. after intermediate cooling (°C) | 60 | 60 | 60 | 60 | 60 | 60 | 60 | 60 |
| First drawing conditions | Drawing temp. (°C) | 60 | 60 | 60 | 60 | 60 | 60 | 60 | 60 |
| | Draw rate (fold change) | 3 | 3 | 3 | 3 | 3 | 3 | 3 | 3 |
| | Relaxation process temperature (°C) | No relaxation process | No relaxation process | No relaxation process | No relaxation process | No relaxation process | No relaxation process | No relaxation process | No relaxation process |
| | Relaxation rate | | | | | | | | |
| Second drawing conditions | Drawing temp. (°C) | 60 | 60 | 60 | 60 | 60 | 60 | 60 | 60 |
| | Draw rate (fold change) | 2.2 | 2.2 | 2.2 | 2.2 | 2.2 | 2.2 | 2.2 | 2.2 |
| | Relaxation process temperature (°C) | 75 | 75 | 75 | 75 | 75 | 75 | 75 | 75 |
| | Relaxation rate | 20 | 20 | 20 | 20 | 20 | 20 | 20 | 20 |
| Total draw rate | | 6.6 | 6.6 | 6.6 | 6.6 | 6.6 | 6.6 | 6.6 | 6.6 |
| Total relaxation rate | | 20 | 20 | 20 | 20 | 20 | 20 | 20 | 20 |
| Thickness (μm) | | 40 | 40 | 40 | 40 | 40 | 40 | 40 | 40 |
| Rate of thermal shrinkage 90°C (%) | Lengthwise | 0.3 | 2.8 | -2.1 | 0.1 | 0.8 | 0.2 | 3.4 | -3.1 |
| | Widthwise | 57.5 | 77.8 | 45.1 | 51.3 | 69.5 | 42.3 | 44.2 | 63.5 |
| Haze (%) | | 3.5 | 3.1 | 4.2 | 4.5 | 3.1 | 3.9 | 3.6 | 3.7 |
| Specific gravity | | 0.89 | 0.88 | 0.89 | 0.90 | 0.89 | 0.91 | 0.90 | 0.90 |

16

| | | Ex. 1 | Ex. 2 | Ex. 3 | Ex. 4 | Ex. 5 | Ex. 6 | Ex. 7 | Ex. 8 |
|---|---|---|---|---|---|---|---|---|---|
| Refractive index | Nx | 1.485 | 1.486 | 1.485 | 1.485 | 1.485 | 1.488 | 1.485 | 1.487 |
| | Ny | 1.509 | 1.509 | 1.511 | 1.511 | 1.509 | 1.512 | 1.508 | 1.511 |
| | Ny-Nx | 0.024 | 0.023 | 0.025 | 0.026 | 0.023 | 0.024 | 0.023 | 0.024 |
| DSC melting point (°C) | Low-temp. side | 93 | 79 | 95 | 97 | 88 | 95 | 96 | 90 |
| | High-temp. side | 145 | 145 | 145 | 145 | 125 | 159 | 145 | 145 |
| Non-reversing heat flow in temperature-modulated DSC (J/g) | | 0.73 | 0.77 | 0.72 | 0.73 | 0.84 | 0.75 | 0.68 | 0.80 |
| Natural shrinkage rate (%) | Widthwise | 1.7 | 2 | 1.6 | 1.7 | 2.1 | 1.9 | 1.5 | 2.1 |
| Finish evaluation | Distortion | Excellent | Good | Good | Excellent | Excellent | Excellent | Good | Good |
| | Wrinkles | Good | Good | Good | Good | Good | Good | Good | Excellent |
| Roll appearance over time | | Excellent | Good | Excellent | Excellent | Good | Good | Excellent | Good |
| Evaluation of heat blocking resistance | | Good | Good | Good | Good | Good | Good | Good | Good |
| Adequacy for float-sink separation | | Good | Good | Good | Good | Good | Good | Good | Good |

[Table 2B]

| | | | Ex. 9 | Ex. 10 | Ex. 11 | Ex. 12 | Ex. 13 | Ex. 14 | Ex. 16 | Ex. 16 |
|---|---|---|---|---|---|---|---|---|---|---|
| Resin composition (mass%) | PP1 | | 60 | 60 | 60 | 60 | 60 | 60 | 60 | 60 |
| | PP2 | | 0 | 0 | 0 | 0 | 0 | 0 | 0 | 0 |
| | PP3 | | 40 | 40 | 40 | 40 | 40 | 40 | 40 | 40 |
| | PP4 | | 0 | 0 | 0 | 0 | 0 | 0 | 0 | 0 |
| | PP5 | | 0 | 0 | 0 | 0 | 0 | 0 | 0 | 0 |
| MD drawing | Preheating temperature (°C) | | 65 | 65 | No drawing | No drawing | No drawing | No drawing | No drawing | No drawing |
| | Draw rate (fold change) | | 1.2 | 1.7 | | | | | | |
| TD drawing | Heat treatment temp. (°C) | | 100 | 100 | 100 | 100 | 100 | 100 | 100 | 100 |
| | Temp. after intermediate cooling (°C) | | 60 | 60 | 60 | 60 | 60 | 60 | 60 | 60 |
| | First drawing conditions | Drawing temp. (°C) | 60 | 60 | 60 | 60 | 60 | 60 | 60 | 60 |
| | | Draw rate (fold change) | 3 | 3 | 3 | 3 | 6.6 | 6.6 | 3 | 3 |
| | | Relaxation process temperature (°C) | No relaxation process | No relaxation process | No relaxation process | 60 | 75 | 75 | No relaxation process | No relaxation process |
| | | Relaxation rate | | | | 5 | 25 | 35 | | |
| | Second drawing conditions | Drawing temp. (°C) | 60 | 60 | 60 | 60 | No second drawing | No second drawing | 60 | 60 |
| | | Draw rate (fold change) | 2.2 | 2.2 | 2.2 | 2.2 | | | 2.2 | 2.2 |
| | | Relaxation process temperature (°C) | 75 | 75 | 75 | 75 | | | 75 | 75 |
| | | Relaxation rate | 20 | 20 | 15 | 15 | | | 20 | 20 |
| | Total draw rate | | 6.6 | 6.6 | 6.6 | 6.6 | 6.6 | 6.6 | 6.6 | 6.6 |
| | Total relaxation rate | | 20 | 20 | 15 | 19 | 25 | 35 | 20 | 20 |
| Thickness (μm) | | | 40 | 40 | 40 | 40 | 40 | 40 | 20 | 80 |
| Rate of thermal shrinkage 90°C (%) | Lengthwise | | 5.7 | 10.8 | 0.3 | 0.3 | 0.2 | 0.2 | 0.5 | 0.4 |
| | Widthwise | | 56.1 | 58.2 | 59.1 | 59.1 | 55.4 | 51.5 | 58.3 | 56.7 |
| Haze (%) | | | 3.9 | 4.2 | 3.7 | 3.5 | 3.7 | 3.8 | 2.9 | 5.6 |
| Specific gravity | | | 0.90 | 0.90 | 0.89 | 0.89 | 0.89 | 0.89 | 0.89 | 0.89 |

18

(continued)

| | | Ex. 9 | Ex. 10 | Ex. 11 | Ex. 12 | Ex. 13 | Ex. 14 | Ex. 16 | Ex. 16 |
|---|---|---|---|---|---|---|---|---|---|
| Refractive index | Nx | 1.488 | 1.491 | 1.486 | 1.485 | 1.485 | 1.486 | 1.485 | 1.486 |
| | Ny | 1.509 | 1.507 | 1.515 | 1.510 | 1.507 | 1.507 | 1.508 | 1.507 |
| | Ny-Nx | 0.020 | 0.016 | 0.029 | 0.025 | 0.022 | 0.021 | 0.023 | 0.021 |
| DSC melting point (°C) | Low-temp. side | 90 | 90 | 93 | 93 | 93 | 93 | 93 | 93 |
| | High-temp. side | 145 | 145 | 145 | 145 | 145 | 145 | 145 | 145 |
| Non-reversing heat flow in temperature-modulated DSC (J/g) | | 0.75 | 0.77 | 0.93 | 0.78 | 0.71 | 0.53 | 0.70 | 0.73 |
| Natural shrinkage rate (%) | Widthwise | 1.8 | 1.9 | 2.7 | 2.1 | 1.5 | 0.4 | 1.7 | 1.8 |
| Finish evaluation | Distortion | Excellent | Good | Good | Good | Good | Good | Excellent | Excellent |
| | Wrinkles | Excellent | Excellent | Good | Good | Excellent | Excellent | Good | Good |
| Roll appearance over time | | Good | Good | Excellent | Good | Good | Excellent | Good | Good |
| Evaluation of heat blocking resistance | | Good | Good | Good | Good | Good | Good | Good | Good |
| Adequacy for float-sink separation | | Good | Good | Good | Good | Good | Good | Good | Good |

19

[Table 3]

| | | | Com. Ex. 1 | Com. Ex. 2 | Com. Ex. 3 | Com. Ex. 4 | Com. Ex. 5 | Com. Ex. 6 | Com. Ex. 7 |
|---|---|---|---|---|---|---|---|---|---|
| Resin composition (mass%) | PP1 | | 0 | 100 | 60 | 60 | COP1/PE1 = 50/50 | Amorphous PET=100 | A layer: PP6=100 B layer: PP4/ PE1/petroleum resin 1 =45/20/35 |
| | PP2 | | 0 | 0 | 0 | 0 | | | |
| | PP3 | | 100 | 0 | 40 | 40 | | | |
| | PP4 | | 0 | 0 | 0 | 0 | | | |
| | PP5 | | 0 | 0 | 0 | 0 | | | |
| MD drawing | Preheating temperature (°C) | | No drawing | No drawing | No drawing | No drawing | No drawing | No drawing | No drawing |
| | Draw rate (fold change) | | | | | | | | |
| TD drawing | Heat-treatment temp. (°C) | | 100 | 75 | 60 | 100 | No treatment | No treatment | No treatment |
| | Temp. after intermediate cooling (°C) | | 60 | 60 | 60 | 60 | No cooling | No cooling | No cooling |
| | First drawing conditions | Drawing temp. (°C) | 60 | 60 | 60 | 60 | 80 | 80 | 80 |
| | | Draw rate (fold change) | 3 | 3 | 3 | 3 | 4 | 4 | 7 |
| | | Relaxation process temperature (°C) | No relaxation process | No relaxation process | No relaxation process | No relaxation process | No relaxation process | No relaxation process | No relaxation process |
| | | Relaxation rate | | | | | | | |
| | Second drawing conditions | Drawing temp. (°C) | 60 | 60 | 60 | 60 | No second drawing | No second drawing | No second drawing |
| | | Draw rate (fold change) | 2.2 | 2.2 | 2.2 | 2.2 | | | |
| | | Relaxation process temperature (°C) | 75 | 75 | 75 | 75 | | | |
| | | Relaxation rate | 20 | 20 | 20 | 0 | | | |
| Total draw rate | | | 6.6 | 6.6 | 6.6 | 6.6 | 4.0 | 4.0 | 7.0 |
| Total relaxation rate | | | 20 | 20 | 20 | 0 | 0 | 0 | 0 |
| Thickness (μm) | | | 40 | 40 | 40 | 40 | 40 | 40 | 50 |
| Rate of thermal shrinkage 90°C (%) | Lengthwise | | 1.4 | Melting | 0.3 | 0.5 | 0.3 | 2.5 | 6.4 |
| | Widthwise | | 10.4 | Melting | 37.3 | 63.3 | 38.3 | 64.3 | 56.5 |
| Haze (%) | | | 10.1 | 2.1 | 2.7 | 3.4 | 3.5 | 5.1 | 5.1 |

(continued)

|  | | Com. Ex. 1 | Com. Ex. 2 | Com. Ex. 3 | Com. Ex. 4 | Com. Ex. 5 | Com. Ex. 6 | Com. Ex. 7 |
|---|---|---|---|---|---|---|---|---|
| Specific gravity | | 0.90 | 0.88 | 0.89 | 0.89 | 0.96 | 1.32 | 0.94 |
| Refractive index | Nx | 1.485 | 1.484 | 1.486 | 1.486 | 1.525 | 1.563 | 1.495 |
| | Ny | 1.512 | 1.508 | 1.507 | 1.513 | 1.529 | 1.623 | 1.521 |
| | Ny-Nx | 0.027 | 0.024 | 0.022 | 0.027 | 0.003 | 0.060 | 0.026 |
| DSC melting point (°C) | Low-temp. side | Absent | 77 | 102 | 92 | 83 | Absent | 83 |
| | High-temp. side | 145 | Absent | 145 | 144 | Absent | Absent | 123 |
| Non-reversing heat flow in temperature-modulated DSC (J/g) | | 0.90 | 0.80 | 0.74 | 1.16 | 0 | 0 | 1.02 |
| Natural shrinkage rate (%) | Widthwise | 2.6 | 2.3 | 2.2 | 7.3 | 1.5 | 0.9 | 3.9 |
| Finish evaluation | Distortion | Poor | Poor | Good | Excellent | Good | Good | Good |
| | Wrinkles | Poor | Poor | Poor | Excellent | Poor | Good | Good |
| Roll appearance over time | | Good | Good | Good | Poor | Good | Good | Poor |
| Evaluation of heat blocking resistance | | Good | Poor | Good | Good | Good | Good | Good |
| Adequacy for float-sink separation | | Good | Good | Good | Good | Good | Poor | Good |

Industrial Applicability

A polypropylene heat-shrinkable film of the invention has excellent shrinking properties as described above, and can be suitably used for packaging of various articles, including labeling of PET bottles. With its specific gravity smaller than 1.0, a polypropylene heat-shrinkable film of the invention is also suited for float-sink separation from PET bottles, contributing to the efficiency of PET bottle recycling.

**Claims**

1. A drawn film comprising a polypropylene resin composition, wherein

   (i) the polypropylene resin composition uses a propylene homopolymer, or a copolymer of propylene and other $\alpha$-olefins, wherein the copolymer of propylene and other $\alpha$-olefins is a random or block copolymer obtained by polymerizing propylene with one or more of $\alpha$-olefin selected from ethylene, 1-butene, 1-pentene, 1-hexene, and 1,4-methyl-1-pentene; and
   (ii) a melt flow rate (MFR) at 230°C of the polypropylene resin composition, measured in compliance with JIS-K-7210, is 0.1 to 30 g/10 min;

   and wherein the drawn film is a polypropylene heat-shrinkable film satisfying the following (1) to (6):

   (1) a hot water thermal shrinkage rate in a widthwise direction, determined as disclosed in the description, of 40% or more and 80% or less when the film is immersed in 90°C hot water for 10 seconds,
   (2) a hot water thermal shrinkage rate in a lengthwise direction, determined as disclosed in the description, of -5% or more and 12% or less when the film is immersed in 90°C hot water for 10 seconds,
   (3) a specific gravity, calculated as a ratio of the film density, measured by the density gradient column method in compliance with JIS K7112, to the density of water at 23°C, of 0.87 or more and 0.95 or less,
   (4) one or more melting peak temperatures in each of a range of 70°C or higher and 100°C or lower, and a range of higher than 100°C and 170°C or lower, as measured with a differential scanning calorimeter as disclosed in the description,
   (5) a refractive index difference Ny - Nx of 0.015 or more and 0.030 or less, where Ny is a widthwise refractive index, and Nx is a lengthwise refractive index, with the refractive indices being determined as disclosed in the description, and
   (6) a widthwise natural shrinkage rate, determined as disclosed in the description, of 0.1% or more and 3.0% or less after the polypropylene heat-shrinkable film is aged for 672 hours in a 40°C, 65% RH atmosphere.

2. The polypropylene heat-shrinkable film according to claim 1, wherein the film has a haze measured in a 23 °C atmosphere following JIS K 7105 using a haze meter of 1% or more and 15% or less.

3. The polypropylene heat-shrinkable film according to claim 1 or 2, wherein the film has a peak in a range of 20°C or higher and 60°C or less in non-reversing heat flow measured as disclosed in the description with a temperature-modulated scanning calorimeter, and a heat absorption, determined as disclosed in the description, of 0.3 J/g or more and 0.95 J/g or less at the peak.

4. The polypropylene heat-shrinkable film according to any one of claims 1 to 3, wherein the film has a widthwise refractive index Ny, determined as disclosed in the description, of 1.490 or more and 1.530 or less.

5. The polypropylene heat-shrinkable film according to any one of claims 1 to 4, wherein the film has a thickness of 12 $\mu$m or more and 100 $\mu$m or less.

6. The polypropylene heat-shrinkable film according to any one of claims 1 to 5, wherein the polypropylene resin composition constituting the polypropylene heat-shrinkable film comprises ethylene or 1-butene as a copolymerized component.

7. The polypropylene heat-shrinkable film according to any one of claims 1 to 6, wherein a total fraction of $\alpha$-olefins in the copolymer of propylene and other $\alpha$-olefins is 8 mol% or more to 24 mol% or less.

8. Alabel comprising the polypropylene heat-shrinkable film of any one of claims 1 to 7 as a base material, and having perforations or pairs of notches.

9. A packaged article comprising a label over at least a part of the outer periphery of a subject of packaging, the label being the polypropylene heat-shrinkable film of any one of claims 1 to 7 in a cylindrical form, or the label of claim 8.


**Patentansprüche**

1. Eine gereckte Folie, umfassend eine Polypropylenharzzusammensetzung,
   wobei

   (i) die Polypropylenharzzusammensetzung ein Propylenhomopolymer oder ein Copolymer von Propylen und anderen $\alpha$-Olefinen verwendet, wobei das Copolymer von Propylen und anderen $\alpha$-Olefinen ein statistisches oder Blockcopolymer ist, das durch Polymerisation von Propylen mit einem oder mehreren $\alpha$-Olefinen, ausgewählt aus Ethylen, 1-Buten, 1-Penten, 1-Hexen und 1,4-Methyl-1-penten, erhalten wird; und
   (ii) eine Schmelzflussrate (MFR) bei 230°C der Polypropylenharzzusammensetzung, gemessen gemäß JIS-K-7210, 0,1 bis 30 g/10 min beträgt;

   und wobei die gereckte Folie eine wärmeschrumpfbare Polypropylenfolie ist, welche die folgenden (1) bis (6) erfüllt:

   (1) eine Warmwasser-Wärmeschrumpfrate in einer Breitenrichtung, bestimmt wie in der Beschreibung offenbart, von 40% oder mehr und 80% oder weniger, wenn die Folie für 10 Sekunden in 90°C warmes Wasser getaucht wird,
   (2) eine Warmwasser-Wärmeschrumpfrate in einer Längenrichtung, bestimmt wie in der Beschreibung offenbart, von -5% oder mehr und 12% oder weniger, wenn die Folie für 10 Sekunden in 90°C warmes Wasser getaucht wird,
   (3) ein spezifisches Gewicht, berechnet als ein Verhältnis der Filmdichte, gemessen durch das Dichtegradienten-Säulenverfahren gemäß JIS K7112, zu der Dichte von Wasser bei 23°C, von 0,87 oder mehr und 0,95 oder weniger,
   (4) eine oder mehrere Schmelzpeaktemperaturen in einem Bereich von jeweils 70°C oder höher und 100°C oder niedriger und einem Bereich von höher als 100°C und 170°C oder niedriger, gemessen mit einem Differential-Scanning-Kalorimeter wie in der Beschreibung offenbart,
   (5) eine Brechungsindexdifferenz Ny - Nx von 0,015 oder mehr und 0,030 oder weniger, wobei Ny ein Brechungsindex in der Breitenrichtung ist und Nx ein Brechungsindex in der Längenrichtung ist, wobei die Brechungsindizes wie in der Beschreibung offenbart bestimmt werden, und
   (6) eine natürliche Schrumpfrate in der Breitenrichtung, bestimmt wie in der Beschreibung offenbart, von 0,1% oder mehr und 3,0% oder weniger, nachdem die wärmeschrumpfbare Polypropylenfolie für 672 Stunden in einer Atmosphäre von 40°C, 65% relativer Feuchte gealtert wurde.

2. Die wärmeschrumpfbare Polypropylenfolie nach Anspruch 1, wobei die Folie eine Trübung, gemessen in einer Atmosphäre von 23°C gemäß JIS K 7105 unter Verwendung eines Trübungsmessers, von 1% oder mehr und 15% oder weniger aufweist.

3. Die wärmeschrumpfbare Polypropylenfolie nach Anspruch 1 oder 2, wobei die Folie einen Peak in einem Bereich von 20°C oder höher und 60°C oder niedriger im nicht reversierenden Wärmestrom, gemessen wie in der Beschreibung offenbart mit einem temperaturmodulierten Scanning-Kalorimeter, und eine Wärmeabsorption, bestimmt wie in der Beschreibung offenbart, von 0,3 J/g oder mehr und 0,95 J/g oder weniger am Peak aufweist.

4. Die wärmeschrumpfbare Polypropylenfolie nach einem der Ansprüche 1 bis 3, wobei die Folie einen Brechungsindex in der Breitenrichtung Ny, bestimmt wie in der Beschreibung offenbart, von 1,490 oder mehr und 1,530 oder weniger aufweist.

5. Die wärmeschrumpfbare Polypropylenfolie nach einem der Ansprüche 1 bis 4, wobei die Folie eine Dicke von 12 $\mu$m oder mehr und 100 $\mu$m oder weniger aufweist.

6. Die wärmeschrumpfbare Polypropylenfolie nach einem der Ansprüche 1 bis 5, wobei die Polypropylenharzzusammensetzung, die die wärmeschrumpfbare Polypropylenfolie bildet, Ethylen oder 1-Buten als copolymerisierten Bestandteil umfasst.

7. Die wärmeschrumpfbare Polypropylenfolie nach einem der Ansprüche 1 bis 6, wobei ein Gesamtanteil an $\alpha$-Olefinen in dem Copolymer von Propylen und anderen $\alpha$-Olefinen 8 mol-% oder mehr bis 24 mol-% oder weniger beträgt.

8. Ein Etikett, das die wärmeschrumpfbare Polypropylenfolie nach einem der Ansprüche 1 bis 7 als ein Grundmaterial umfasst und Perforationen oder Kerbenpaare aufweist.

9. Ein verpackter Gegenstand, umfassend ein Etikett über mindestens einem Teil des Außenumfangs eines Verpackungsgegenstands, wobei das Etikett die wärmeschrumpfbare Polypropylenfolie nach einem der Ansprüche 1 bis 7 in zylindrischer Form oder das Etikett nach Anspruch 8 ist.

**Revendications**

1. Film étiré comprenant une composition de résine de polypropylène, dans lequel

   (i) la composition de résine de polypropylène utilise un homopolymère de propylène, ou un copolymère de propylène et d'autres $\alpha$-oléfines, dans laquelle le copolymère de propylène et d'autres $\alpha$-oléfines est un copolymère aléatoire ou séquencé obtenu par polymérisation du propylène avec une ou plusieurs $\alpha$-oléfines choisies parmi l'éthylène, le 1-butène, le 1-pentène, le 1-hexène, et le 1,4-méthyl-1-pentène ; et
   (ii) l'indice de fluidité à chaud (MFR) à 230°C de la composition de résine de polypropylène, mesuré conformément à la norme JIS-K-7210, va de 0,1 à 30 g/10 min ;

   et dans lequel le film étiré est un film thermorétractable de polypropylène satisfaisant les points (1) à (6) suivants :

   (1) un taux de thermorétractation dans de l'eau chaude dans la direction de la largeur, déterminé comme divulgué dans la description, de 40 % ou plus et de 80 % ou moins lorsque le film est immergé dans de l'eau chaude à 90°C pendant 10 secondes,
   (2) un taux de thermorétractation dans de l'eau chaude dans la direction de la longueur, déterminé comme divulgué dans la description, de -5 % ou plus et de 12 % ou moins lorsque le film est immergé dans de l'eau chaude à 90°C pendant 10 secondes,
   (3) une densité relative, calculée en tant que rapport de la densité de film, mesurée par la méthode de la colonne à gradient de densité conformément à la norme JIS K7112, à la densité de l'eau à 23°C, de 0,87 ou plus et de 0,95 ou moins,
   (4) une ou plusieurs températures de pic de fusion dans chacune des plages parmi une plage de 70°C ou plus et de 100°C ou moins, et une plage de plus de 100°C et de 170°C ou moins, telles que mesurées avec un calorimètre différentiel à balayage comme divulgué dans la description,
   (5) une différence d'indice de réfraction Ny - Nx de 0,015 ou plus et de 0,030 ou moins, où Ny est un indice de réfraction dans le sens de la largeur, et Nx est un indice de réfraction dans le sens de la longueur, les indices de réfraction étant déterminés comme divulgué dans la description, et
   (6) un taux de rétractation naturel dans le sens de la largeur, déterminé comme divulgué dans la description, de 0,1 % ou plus et de 3,0 % ou moins après que le film thermorétractable de polypropylène est vieilli pendant 672 heures dans une atmosphère à 40°C, 65 % de HR.

2. Film thermorétractable de polypropylène selon la revendication 1, dans lequel le film a un trouble, mesuré dans une atmosphère à 23°C en suivant la norme JIS K 7105 en utilisant un turbidimètre, de 1 % ou plus et de 15 % ou moins.

3. Film thermorétractable de polypropylène selon la revendication 1 ou 2, dans lequel le film a un pic dans une plage de 20°C ou plus et de 60°C ou moins dans un flux de chaleur non réversible, mesuré comme divulgué dans la description avec un calorimètre à balayage à température modulée, et une absorption de chaleur, déterminée comme divulgué dans la description, de 0,3 J/g ou plus et de 0,95 J/g ou moins au niveau du pic.

4. Film thermorétractable de polypropylène selon l'une quelconque des revendications 1 à 3, dans lequel le film a un indice de réfraction dans le sens de la largeur Ny, déterminé comme divulgué dans la description, de 1,490 ou plus et de 1,530 ou moins.

5. Film thermorétractable de polypropylène selon l'une quelconque des revendications 1 à 4, dans lequel le film a une

épaisseur de 12 $\mu$m ou plus et de 100 $\mu$m ou moins.

6. Film thermorétractable de polypropylène selon l'une quelconque des revendications 1 à 5, dans lequel la composition de résine de polypropylène constituant le film thermorétractable de polypropylène comprend de l'éthylène ou du 1-butène en tant que composant copolymérisé.

7. Film thermorétractable de polypropylène selon l'une quelconque des revendications 1 à 6, dans lequel la fraction totale des $\alpha$-oléfines dans le copolymère de propylène et d'autres $\alpha$-oléfines est de 8 % en moles ou plus à 24 % en moles ou moins.

8. Étiquette comprenant le film thermorétractable de polypropylène selon l'une quelconque des revendications 1 à 7 en tant que matériau de base, et ayant des perforations ou des paires d'encoches.

9. Article emballé comprenant une étiquette au-dessus d'au moins une partie de la périphérie externe d'un sujet de l'emballage, l'étiquette étant le film thermorétractable de polypropylène selon l'une quelconque des revendications 1 à 7 sous une forme cylindrique, ou l'étiquette selon la revendication 8.

[FIG. 1]

[FIG. 2]

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 5690103 B
- JP 4574462 B
- EP 2116354 A1
- JP 2001294678 A

**Non-patent literature cited in the description**

- In-situ investigation on the structural evolution of mesomorphic isotactic polypropylene in a continuous heating process. *Polymer*, 2016, vol. 105, 133-143